(19) Europäisches Patentamt
European Patent Office
Office européen des brevets

(11) **EP 1 324 072 B1**

(12) **EUROPEAN PATENT SPECIFICATION**

(45) Date of publication and mention
of the grant of the patent:
**18.03.2009   Bulletin 2009/12**

(21) Application number: **02027925.3**

(22) Date of filing: **13.12.2002**

(51) Int Cl.:
*G01S 17/10* *(2006.01)*     *G01S 7/486* *(2006.01)*
*G01S 7/497* *(2006.01)*

(54) **Distance measuring device**

Entfernungsmessgerät

Télémètre

(84) Designated Contracting States:
**AT BE BG CH CY CZ DE DK EE ES FI FR GB GR IE IT LI LU MC NL PT SE SI SK TR**

(30) Priority: **14.12.2001   IT BO20010759**

(43) Date of publication of application:
**02.07.2003   Bulletin 2003/27**

(73) Proprietor: **Datasensor S.p.A.**
**40050 Monte San Pietro (BO) (IT)**

(72) Inventors:
• **Marchi, Paolo**
**40026 Imola (IT)**
• **Pilone, Ciro Adelmo**
**40012 Calderara Di Reno (IT)**

(74) Representative: **Jorio, Paolo et al**
**STUDIO TORTA**
**Via Viotti 9**
**10121 Torino (IT)**

(56) References cited:
**DE-A- 3 429 062**     **US-A- 5 515 056**
**US-B1- 6 226 076**

EP 1 324 072 B1

**Description**

The present invention relates to a distance measuring device.

More specifically, the present invention relates to an optoelectronic distance measuring device of the type comprising a light emitting unit having, for example, a LASER photoemitter for generating a light beam defined by a number of light pulses in a predetermined direction; an optical assembly for focusing and deflecting the light beam generated by the photoemitter, so as to "channel" it onto an object whose distance with respect to the distance measuring device is to be measured; and a light receiving unit for picking up and converting the light beam reflected by the object into an electric signal, the voltage or current value to time pattern of which is related to the distance between the object and the distance measuring device.

In known distance measuring devices of the type described above, the receiving unit normally comprises a photoreceiver for converting the light pulses of the reflected beam into electric pulses, each of which has a delay (with respect to the emitted pulse) related to the distance travelled by the light pulse to and from the object; and an amplifying circuit for maintaining a substantially constant amplitude of each received electric pulse, regardless of the distance and reflectance of the object.

The receiving unit also comprises a processing circuit for receiving and so processing the electric pulses from the amplifying circuit as to supply a signal indicating the measured distance. More specifically, the processing circuit determines the measured-distance signal as a function of the "transit time", i.e. by processing the delay, of each received electric pulse.

Known distance measuring devices of the above type have the major drawback of failing to provide for accurate distance measurements.

That is, the measurement supplied by known distance measuring devices of the type described is affected by errors related to the circuit propagation delays introduced into the electric pulses during processing by the electronic circuits in the receiving unit. Which propagation delays vary as a function of changes in the circuit parameter values of the electric components, caused, for example, by variations in the temperature to which the electronic circuits are subjected, and/or by ageing of the electronic circuits.

More specifically, the duration of the electric pulse generated during processing is related both to the "transit time" taken by the beam to travel the "net" distance between the object and the distance measuring device, and to the internal propagation delays of the circuits.

US-4738529 discloses an apparatus for measuring the transit time of electromagnetic waves has a pulse generator which is arranged in a feedback loop and which can be triggered by pulses. Either the measurement path or a reference path with a reference receiver at the end of it can be selectively included in the feedback loop. The pulse generator is also connected to a computing/counting stage which counts the pulse transmitted during the measurement and reference periods separately and computes the transit time therefrom.

US-5515056 discloses a burst tone range processing system for determining the distance between a ranging station and a signal re-transmitting target device, generates a burst tone signal of finite duration and transmits the signal along a delay transmission path from the ranging station to the target and along a reference transmission path within the ranging station. The transmitted signals are received from the reference and delay paths and assigned time tags. The signals are then correlated and the time tags assigned to correlated signals are compared.

It is an object of the present invention to provide a distance measuring device of the type described above, designed to eliminate the aforementioned drawbacks.

According to the present invention, there is provided a distance measuring device as claimed in Claim 1.

A non-limiting embodiment of the present invention will be described by way of example with reference to the accompanying drawings, in which:

Figure 1 shows a block diagram of a distance measuring device in accordance with the teachings of the present invention;
Figure 2 shows a time graph of a number of signals generated by electric circuits forming part of the distance measuring device in Figure 1;
Figure 3 shows a block diagram of a variation of the distance measuring device in Figure 1;
Figure 4 shows a time graph of a number of signals generated by electric circuits forming part of the distance measuring device in Figure 3.

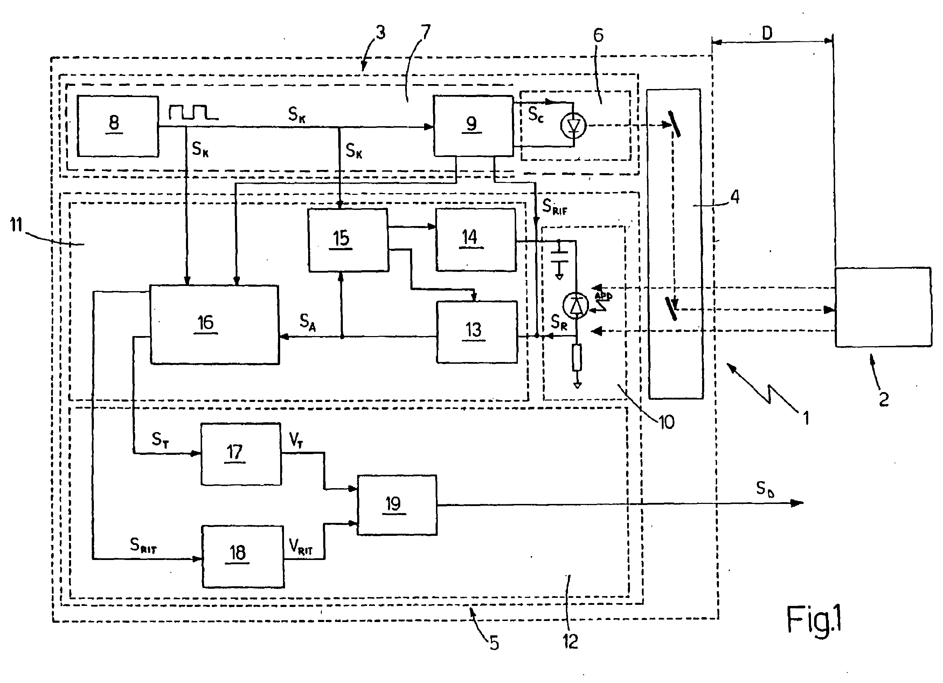

Number 1 in Figure 1 indicates as a whole an optoelectronic distance measuring device for measuring the distance D of a generic object 2 with respect to distance measuring device 1.

Distance measuring device 1 comprises an emitting unit 3 for generating a light beam onto object 2; an optical assembly 4 for focusing and deflecting the light beam, so as to "channel" it to and from object 2; and a receiving unit 5 for receiving and converting the light beam reflected by object 2 into an electric signal $S_R$ related to the distance D of object 2 from distance measuring device 1, and for so processing electric signal $S_R$ as to supply a distance signal $S_D$ indicating the measured distance D.

In the example shown, optical assembly 4 comprises a number of lenses and mirrors (and any interference and polarizing filters not shown) appropriately arranged at emitting unit 3 to orient the generated light beam onto object 2, and at receiving unit 5 to "channel" the light beam reflected by object 2 towards receiving unit 5. Optical assembly 4 is a known type and therefore not described in detail.

Emitting unit 3 comprises a photoemitter 6 for emitting the light beam onto object 2; and a signal generating circuit 7 for controlling photoemitter 6, and in turn comprising a clock generator 8 for supplying a clock signal $S_K$, and a modulating circuit 9 for controlling, as a function of clock signal $S_K$, emission of the light beam by photoemitter 6.

Clock generator 8 may be defined by a quartz generator for supplying clock signal $S_K$ (e.g. a rectangular wave) with a predetermined ratio between the duration $T_{ON}$ of its pulses and its period T (duty cycle, for example, of 50%). If distance measuring device 1 comprises a microprocessor (not shown), clock signal $S_K$ may obviously be supplied directly by the microprocessor itself.

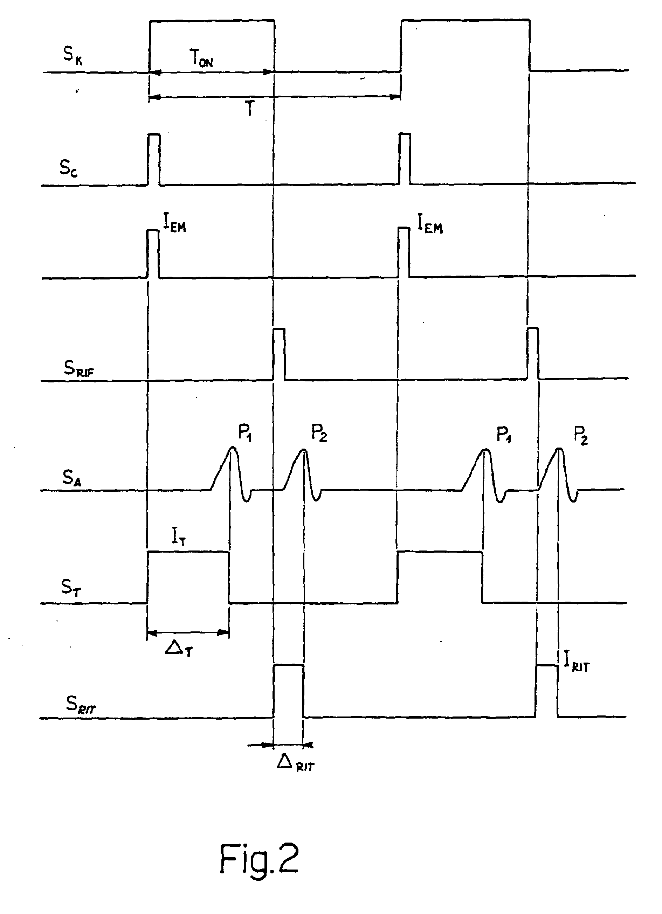

Modulating circuit 9 may be defined by a modulator for generating, as a function of clock signal $S_K$, a control signal $S_C$ defined by a number of equally spaced electric pulses of predetermined amplitude and duration. In the Figure 2 example, each electric pulse of control signal $S_C$ is generated by modulating circuit 9 at each leading edge of clock signal $S_K$, and has a very short duration, i.e. in the order, for example, of a few nanoseconds.

Modulating circuit 9 also generates, as a function of clock signal $S_K$ a reference signal $S_{RIF}$ defined by a number of equally spaced electric pulses of predetermined amplitude and duration. In the Figure 2 example, each electric pulse of reference signal $S_{RIF}$ is generated by modulating circuit 9 at each trailing edge of clock signal $S_K$, and has a very short duration, i.e. in the order of a few nanoseconds.

With reference to Figure 1, photoemitter 6 may be defined, for example, by a laser diode operating, preferably but not necessarily, in the infrared range, and which receives control signal $S_C$ from modulating circuit 9, and generates, as a function of control signal $S_C$, a light beam defined by a number of light pulses, each of predetermined amplitude and duration. In the Figure 2 example, each light pulse, hereinafter indicated $I_{EM}$, is generated by emitting unit 3 at each leading edge of the pulses in control signal $S_C$.

With reference to Figure 1, receiving unit 5 comprises a photoreceiver 10 for picking up and converting the light pulses $I_{EM}$ in the light beam reflected by object 2 into signal $S_R$ comprising a series of electric pulses, each of which has a leading edge spaced by a time interval $T_{OF}$ with respect to the leading edge of the respective light pulses $I_{EM}$ emitted by photoemitter 6.

In the example shown, time interval $T_{OF}$ is commonly referred to as "transit time", and is related to the length of the optical path between emitting unit 3, object 2, and receiving unit 5.

In connection with the above, it should be pointed out that the "net" optical distance D is a fraction of said optical path, which is twice "net" optical distance D plus the optical paths within distance measuring device 1.

Receiving unit 5 also comprises a processing circuit 11 for processing the pulses of signal $S_R$ from photoreceiver 10, and in turn supplying a pulse signal $S_T$ (shown in Figure 2) defined by a sequence of pulses $I_T$, each having a duration $\Delta_T$ related both to transit time $T_{OF}$ and to the internal circuit delays $\Delta_{RIT}$ introduced by processing circuit 11 during processing.

Processing circuit 11 also cooperates with signal generating circuit 7, from which it receives reference signal $S_{RIF}$, and generates, as a function of reference signal $S_{RIF}$, a delay signal $S_{RIT}$ (shown in Figure 2) whose duration is related to the internal circuit delays $\Delta_{RIT}$ introduced into pulses $I_T$ of pulse signal $S_T$ by processing circuit 11 when processing the electric pulses of signal $S_R$.

Receiving unit 5 also comprises a filtering and matching circuit 12, which processes delay signal $S_{RIT}$ and pulse signal $S_T$ to eliminate from pulse signal $S_T$ all the internal circuit delays $\Delta_{RIT}$ introduced by processing circuit 11 when processing the electric pulses of signal $S_R$, and so supply distance signal $S_D$ indicating the measured net distance D.

With reference to Figure 1, photoreceiver 10 may be defined, for example, by an avalanche photodiode (APD) connected to a predetermined load, while processing circuit 11 comprises an amplifying circuit 13, which sequentially receives the electric pulses of signal $S_R$ from photoreceiver 10, and the electric pulses of reference signal $S_{RIF}$ from modulating circuit 9, and supplies a signal $S_A$ defined by superimposing and appropriately amplifying the pulses of signals $S_R$ and $S_{RIF}$. The signal $S_A$ supplied by amplifying circuit 13 therefore comprises a sequence of alternating, appropriately amplified pulses $P_1$ and $P_2$ as shown in Figure 2.

In connection with the above, it should be pointed out that the output of modulating circuit 9 supplying reference signal $S_{RIF}$ is connected electrically to the input of amplifying circuit 13 receiving signal $S_R$.

Processing circuit 11 also comprises a supply circuit 14 for supplying photoreceiver 10 with a predetermined supply voltage; and an amplitude detecting circuit 15, which, as a function of signal $S_A$ amplified by amplifying circuit 13, controls both supply circuit 14, to appropriately regulate the voltage supply (and therefore gain) of photoreceiver 10, and amplifying circuit 13, to maintain a predetermined amplitude of the electric pulses of signal $S_R$ supplied by amplifying circuit 13, regardless of distance D and the reflectance of object 2.

More specifically, amplitude detecting circuit 15 receives clock signal $S_K$ from clock generator 8 to control, together with amplifying circuit 13 and supply circuit 14, amplification of the electric pulses of signal $S_R$. It should be pointed out that detecting circuit 15, by acting on supply circuit 14, varies the amplitude of each electric pulse in signal $S_R$, while leaving the amplitude of the electric pulses in reference signal $S_{RIP}$ unchanged.

In the example shown, using an APD photoreceiver 10, the amplitudes of pulses $P_1$ and $P_2$ in signal $S_A$ can be equalized by appropriately varying supply to photoreceiver 10 (i.e. by varying the reverse voltage supplied to the APD). That is, the amplification of pulses $P_1$ of the received optical signal can be varied, while at the same time maintaining constant amplification of pulses $P_2$ of reference signal $S_{RIF}$.

With reference to Figure 1, processing circuit 11 also comprises a pulse shaping and separating circuit 16 for receiving and processing electric pulses $P_1$ and $P_2$ of signal $S_A$ from amplifying circuit 13, and clock signal $S_K$ from clock generator 8, so as to supply, at a first output, pulse signal $S_T$ defined by pulses $I_T$ having duration $\Delta_T$ related both to "transit time" $T_{OF}$ of the relative pulses picked up by photoreceiver 10, and to the circuit delays $\Delta_{RIT}$ introduced by processing circuit 11.

Pulse shaping circuit 16 also supplies, at a second output, delay signal $S_{RIT}$ comprising electric pulses $I_{RIT}$, each of a duration $\Delta_{RIT}$ related to the circuit delays introduced into pulse signal $S_T$ by the electronic components (not shown) of photoreceiver 10, amplifying circuit 13, and pulse shaping circuit 16 itself.

More specifically, with reference to Figure 2, pulse signal $S_T$ has a leading edge corresponding with the leading edge of the emitted light pulse $I_{EM}$, and a trailing edge corresponding with a predetermined (e.g. mid-amplitude) point on the leading edge of pulse $P_1$ of signal $S_A$; whereas each pulse in delay signal $S_{RIT}$ has a leading edge corresponding with the leading edge of a pulse in reference signal $S_{RIF}$, and a trailing edge corresponding with a predetermined (e.g. mid-amplitude) point on the leading edge of pulse $P_2$ of signal $S_A$.

In connection with the above, it should be pointed out that, during processing by processing circuit 11, the electric pulses defining reference signal $S_{RIF}$, and the electric pulses of signal $S_R$ from photoreceiver 10 are subject to the same internal circuit delays $\Delta_{RIT}$, by travelling along the same "electrical path" within the component circuits of processing circuit 11, i.e. through photoreceiver 10, amplifying circuit 13, and pulse shaping circuit 16.

Figure 2 shows example time graphs of reference signal $S_{RIF}$; delay signal $S_{RIT}$, whose electric pulses $I_{RIT}$ have a duration $\Delta_{RIT}$ corresponding to the internal circuit delays introduced by processing circuit 11; and pulse signal $S_T$, whose pulses $I_T$ each have a duration $\Delta_T$ equal to the sum of duration $T_{OF}$ (related to the total optical path) and duration $\Delta_{RIT}$ (related to internal circuit delays) ($\Delta_T = T_{OF} + \Delta_{RIT}$).

With reference to Figure 1, filtering circuit 12 comprises a filter 17 for receiving pulse signal $S_T$ from pulse shaping circuit 16, and producing, by means of a given transfer function, a voltage signal $V_T$ having an amplitude proportional to the duration $\Delta_T$ of each electric pulse $I_T$ of pulse signal $S_T$.

Filtering circuit 12 also comprises a filter 18 for receiving delay signal $S_{RIT}$ from pulse shaping circuit 16, and producing, by means of a given transfer function, a voltage signal $V_{RIT}$ having an amplitude proportional to the duration $\Delta_{RIT}$ of each electric pulse $I_{RIT}$ of delay signal $S_{RIT}$.

Finally, filtering circuit 12 also comprises a calculating circuit 19 for receiving and processing signals $V_{RIT}$ and $V_T$ from respective filters 18 and 17, to eliminate the contribution of the circuit delays in signal $V_T$. More specifically, calculating circuit 19 implements a predetermined transfer function $F_1$ for calculating the difference between signal $V_T$ and signal $V_{RIT}$, so as to obtain a distance signal $S_D$ from which any error caused by delays introduced by processing circuit 11 is "filtered". The transfer function $F_1$ implemented by calculating circuit 19 may, for example, be the following:

$$F_1 = G\,(V_T - V_{RIT}) + V_o$$

where G is the gain of the calculating circuit, and $V_o$ is a reference signal of a predetermined voltage. It should be pointed out that, by means of transfer function $F_1$, i.e. by varying gain G and signal $V_o$, calculating circuit 19 is able to adapt distance signal $S_D$ indicating distance D to the requirements of the user. The operations performed by calculating circuit 19 by means of transfer function $F_1$ may obviously be performed by means of an appropriate analog circuit (defined by operational amplifiers), or by means of a microprocessor with predetermined software, by which to implement transfer function $F_1$ to obtain distance signal $S_D$ from signals $V_{REF}$ and $V_T$.

Operation of distance measuring device 1 is easily deducible from the foregoing description with no further explanation required.

Distance measuring device 1 as described above has the advantage of greatly improving distance measuring accuracy as compared with known devices, by eliminating any distance measuring errors caused by alteration of the distance signals by circuit delays introduced by internal electric circuits (as a result, for example, of a change in temperature).

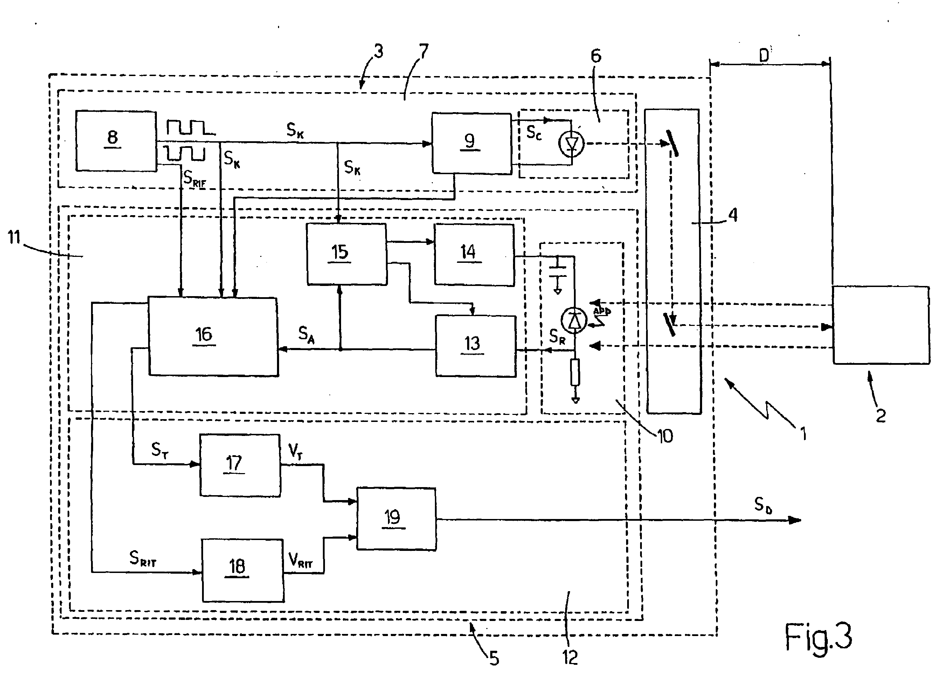

The distance measuring device in the Figure 3 variation differs from distance measuring device 1 described above by the reference signal $S_{RIP}$ generated by signal generating circuit 7 being supplied directly to pulse shaping circuit 16 of processing circuit 11, as opposed to going through amplifying circuit 13.

More specifically, distance measuring device 1 in Figure 3 is able to eliminate the internal circuit delays introduced into pulse signal $S_T$ by pulse shaping circuit 16 when processing signal $S_A$.

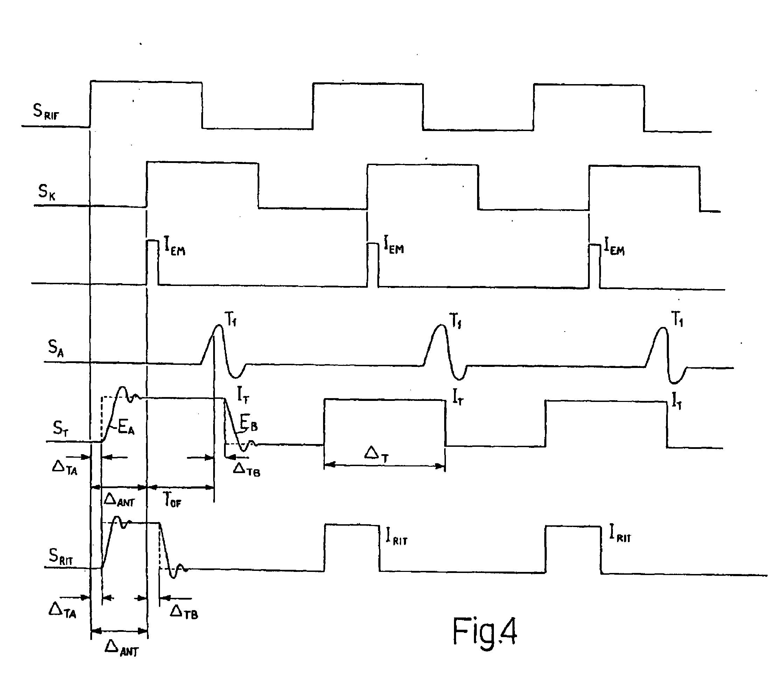

With reference to Figures 3 and 4, clock generator 8 of distance measuring device 1 supplies clock signal $S_K$ defined, for example, by a preferably, though not necessarily, rectangular wave having a predetermined frequency $F_1$ and a predetermined ratio between the duration $T_{ON}$ of its pulses and its period T (duty cycle, for example, of 50%); and a reference signal $S_{RIF}$ also defined by a preferably, though not necessarily, rectangular wave having a frequency $F_2$ equal to and leading in phase with respect to frequency $F_1$ of clock signal $S_K$ by a predetermined angle $\alpha$ (not shown), e.g. 90° ($\alpha$=90°).

Pulse shaping circuit 16 receives clock signal $S_K$ and reference signal $S_{RIP}$ from clock generator 8, and signal $S_A$ from amplifying circuit 13, and processes these signals to generate delay signal $S_{RIT}$ and pulse signal $S_T$ at two different outputs.

With reference to Figure 4, in the example shown, the leading edges of the pulses in delay signal $S_{RIT}$ and pulse signal $S_T$ are generated by pulse shaping circuit 16 at the leading edge of reference signal $S_{RIF}$, while the trailing edge of each pulse $I_T$ of pulse signal $S_T$ is generated at a predetermined (e.g. mid-amplitude) point $T_1$ of the leading edge of signal $S_A$.

The trailing edge of each pulse $I_{RIT}$ in delay signal $S_{RIT}$, on the other hand, is generated at the leading edge of pulse $I_{EM}$.

In addition to comprising transit time $T_{OF}$ and the internal circuit delays $\Delta_{RIT}$ introduced in this case by pulse shaping circuit 16 at the leading and trailing edges of the pulses in pulse signal $S_T$ and hereinafter indicated $\Delta_{TA}$ and $\Delta_{TB}$, the duration of signal $S_T$ also comprises a predetermined lead time interval $\Delta_{ANT}$ corresponding to the time interval between the leading edge of the pulse of reference signal $S_{RIF}$ and the leading edge of the pulse of clock signal $S_K$.

In the example shown, lead time interval $\Delta_{ANT}$ is introduced to compensate for overshooting in pulse signal $S_T$ when shaping each pulse $I_T$, and in delay signal $S_{RIT}$ when shaping each pules $I_{RIT}$.

With reference to Figure 4, said circuit delays $\Delta_{TA}$ and $\Delta_{TB}$ in pulse $I_T$ are also introduced equally by pulse shaping circuit 16 at the leading edge and trailing edge respectively of pulse $I_{RIT}$ of delay signal $S_{RIT}$.

Delay signal $S_{RIT}$ therefore has a duration $\Delta_{RIT}$ related both to the circuit delays introduced into pulse signal $S_T$ by pulse shaping circuit 16, and to the lead time interval $\Delta_{ANT}$ introduced, as stated, to compensate for switching-generated overshooting and oscillations in pulse signal $S_T$ and delay signal $S_{RIT}$.

To ensure in delay signal $S_{RIT}$ the same variations in circuit delays $\Delta_{TA}$ and $\Delta_{TB}$ (as in pulse signal $S_T$), pulse shaping circuit 16 may be provided with digital electronic circuits (not shown), e.g. a first and a second flip-flop integrated in the same chip so as to have the same performance in terms of signal response time to variations in characteristics resulting from thermal drift and ageing.

In the example shown, the first flip-flop (not shown) generates pulse signal $S_T$ at the leading edge of reference signal $S_{RIF}$ and the predetermined point on the leading edge of signal $S_A$, while the second flip-flop (not shown) generates delay signal $S_{RIT}$ as a function of the leading edges of the pulses of reference signal $S_{RIF}$ and the leading edges of the pulses of signal $I_{EM}$ respectively.

In connection with the above, it should be pointed out that, in use, the two digital circuits (first and second flip-flop) integrated in pulse shaping circuit 16 are subjected at all times to the same operating temperature (by forming part of the same chip), and, by having the same dynamic behaviour, advantageously introduce into each pulse $I_T$ and $I_{RIT}$ the same variations in circuit delays $\Delta_{TA}$ and $\Delta_{TB}$, regardless of the operating temperature of the circuit. As such, regardless of its thermal condition, pulse shaping circuit 16 generates a delay signal $S_{RIT}$ containing both information relative to internal circuit delays $\Delta_{TA}$ and $\Delta_{TB}$ affecting pulse signal $S_T$, and information relating to predetermined lead time interval $\Delta_{ANT}$.

Delay signal $S_{RIT}$ and pulse signal $S_T$ are supplied by pulse shaping circuit 16 to filtering and matching circuit 12, which, by means of filters 17 and 18, generates voltage signals $V_T$ and $V_{RIT}$ having an amplitude proportional to duration $\Delta_T$ and $\Delta_{RIT}$ respectively of each electric pulse $I_T$ and $I_{RIT}$.

By means of calculating circuit 19, filtering circuit 12 is also able to determine distance signal $S_D$ as a function of signals $V_T$ and $V_{RIT}$ by means of a predetermined transfer function for eliminating from signal $V_T$, associated with pulse signal $S_T$, both the component relative to the internal circuit delays of pulse shaping circuit 16 indicated by delay signal $S_{RIT}$, and the predetermined lead time interval $\Delta_{ANT}$.

In connection with the above, it should be pointed out that signal $V_T$ associated with pulse signal $S_T$ may, for example, be calculated by means of a function for determining the mean value of a series of pulses $I_T$ of pulse signal $S_T$. More specifically, in calculating the mean value, the "leading" overshoot and oscillation (indicated $E_A$ in the Figure 4 example) present in the leading edge of each pulse $I_T$ and completely smoothed out by lead time interval $\Delta_{ANT}$ is compensated with the "trailing" overshoot and oscillation (indicated $E_B$ in the Figure 4 example) generated at the trailing edge of each pulse $I_T$, thus advantageously eliminating the measuring error in pulse signal $S_T$, and consequently in distance signal $S_D$, introduced by overshooting and oscillation in both pulse signal $S_T$ and delay signal $S_{RIT}$.

Clearly, changes may be made to the distance measuring device as described herein without, however, departing from the scope of the present invention.

**Claims**

1. A distance measuring device (1) comprising:

   - emitting means (6) for emitting a light beam onto an object (2);
   - receiving means (10) for receiving and converting the light beam reflected by said object (2) into a first electric signal ($S_R$) related to the distance (D) between the object (2) and the distance measuring device (1);
   - processing means (11) for receiving in input said first electric signal ($S_R$) from said receiving means (10), and processing said first electric signal ($S_R$) to supply at output a second electric signal ($S_T$) related both to said distance (D) and to the internal circuit delays ($\Delta_{RIT}$) introduced into first electric signal ($S_R$) by the processing means (11) during processing of said first electric signal ($S_R$);

- signal generating means (7) for controlling said emitting means (6) and cooperating with said processing means (11) to generate a delay signal ($S_{RIT}$) related to the internal circuit delays ($\Delta_{RIT}$) in said second electric signal ($S_T$);

- filtering means (12) for processing said delay signal ($S_{RIT}$) and said second electric signal ($S_T$) by means of a predetermined transfer function ($F_1$), so as to eliminate the contribution of said internal circuit delays ($\Delta_{RIT}$) from said second electric signal ($S_T$), and supply a distance signal ($S_D$) indicating said distance (D) of the object (2) from the distance measuring device (1) ;

said distance measuring device (1) being **characterized in that**: said signal generating means (7) generate a reference signal ($S_{RIF}$) and said processing means (11) generating said delay signal ($S_{RIT}$) as a function of said reference signal ($S_{RIF}$) supplied by said signal generating means (7); said reference signal ($S_{RIF}$) is directly supplied by said signal generating means (7) to said processing means (11) via an electric connection between said processing means (11) and said signal generating means (7).

2. A distance measuring device as claimed in claim 1, **characterized in that** said signal generating means (7) comprise clock generating means (8) for generating a clock signal ($S_K$); and modulating means (9) for receiving and processing said clock signal ($S_K$) to supply a control signal ($S_C$) for controlling said emitting means (6).

3. A distance measuring device as claimed in the Claims 1 o 2, **characterized in that** said filtering means (12) comprise a calculating circuit (19) for implementing said predetermined transfer function ($F_1$) on the second electric signal ($S_T$) and on said delay signal ($S_{RIT}$), so as to eliminate the contribution of said internal circuit delays ($\Delta_{RIT}$) from the second electric signal ($S_T$), and supply the distance signal ($S_D$) related to the measured distance (D).

4. A distance measuring device as claimed in any one of the foregoing Claims, **characterized in that** said predetermined transfer function ($F_1$) is defined by an operation to determine the difference between said second electric signal ($S_T$) and said delay signal ($S_{RIT}$).

5. A distance measuring device as claimed in any one of Claims 2 to 4, **characterized in that** said processing means (11) comprise an amplifying circuit (13) for amplifying said first electric signal ($S_R$) in predetermined manner to supply a third signal ($S_A$).

6. A distance measuring device as claimed in any one of Claims 2 to 5, **characterized in that** said modulating means (9) generate said reference signal ($S_{RIF}$).

7. A distance measuring device as claimed in Claim 6, **characterized in that** said modulating means (9) supply said reference signal ($S_{RIF}$) to said amplifying circuit (13).

8. A distance measuring device as claimed in Claim 7, **characterized in that** said processing means (11) comprise a pulse shaping circuit (16) for receiving and processing said third signal ($S_A$) supplied by said amplifying circuit (13), so as to supply said second electric signal ($S_T$) and said delay signal ($S_{RIT}$).

9. A distance measuring device as claimed in any one of Claims 2 to 8, **characterized in that** said clock generating circuit (8) generates said reference signal ($S_{RIF}$).

10. A distance measuring device as claimed in Claim 9, **characterized in that** said processing means (11) comprise a pulse shaping circuit (16) for receiving said first electric signal ($S_A$) from said amplifying circuit (13), and said reference signal ($S_{RIF}$) and said clock signal ($S_K$) from said clock generating circuit (8); said pulse shaping circuit (16) processing said first electric signal ($S_A$), said reference signal ($S_{RIF}$) , and said clock signal ($S_K$) to supply said second electric signal ($S_T$) and said delay signal ($S_{RIT}$).

11. A distance measuring device as claimed in Claim 10, **characterized in that** said clock signal ($S_K$) and said reference signal ($S_{RIF}$) have the same frequency.

12. A distance measuring device as claimed in Claim 11, **characterized in that** said clock signal ($S_K$) and said reference signal ($S_{RIF}$) are phase shifted by a predetermined angle ($\alpha$).

13. A distance measuring device as claimed in any one of the foregoing Claims, **characterized in that** said emitting means (6) comprise a photoemitter (6).

14. A distance measuring device as claimed in Claim 13, **characterized in that** said photoemitter (6) is a LASER photoemitter.

15. A distance measuring device as claimed in any one of the foregoing Claims, **characterized in that** said receiving means (10) comprise a photoreceiver (10).

16. A distance measuring device as claimed in Claim 15, **characterized in that** said photoreceiver (10) comprises an avalanche photodiode.

17. A distance measuring device as claimed in any one of the foregoing Claims, **characterized by** comprising an optical assembly (4) for channelling said light beam to and from said object (2).

**Patentansprüche**

1. Abstandsmess-Vorrichtung (1) mit:

   einem Emissionsmittel (6) zum Emittieren von einem Lichtstrahl zu einem Objekt (2);
   einem Empfangsmittel (10) zum Empfangen und Umwandeln des vom dem Objekt (2) reflektierten Lichtstrahls in ein erstes elektrisches Signal ($S_R$), das in Beziehung zu dem Abstand (D) zwischen dem Objekt und der Abstandsmess-Vorrichtung (1) steht;
   einem Verarbeitungsmittel (11) zum Empfangen am Eingang des ersten elektrischen Signals ($S_R$) von dem Empfangsmittel (10) und zum Verarbeiten des ersten elektrischen Signals ($S_R$), um ein zweites elektrisches Signal ($S_T$) zu liefern, das in Beziehung sowohl zu dem Abstand (D) als auch zu internen Schaltungsverzögerungen ($\Delta_{RIT}$) steht, die in das erste elektrische Signal ($S_R$) durch das Verarbeitungsmittel (11) während der Verarbeitung des ersten elektrischen Signals ($S_R$) eingeführt wurden;

   einem Signalerzeugungsmittel (7) zum Steuern des Emissionsmittels (6) und zum Zusammenwirken mit dem Verarbeitungsmittel (11) zum Erzeugen eines Verzögerungssignals ($S_{RIT}$), das in Beziehung zu den internen Schaltverzögerungen ($\Delta_{RIT}$) in dem zweiten elektrischen Signal ($S_T$) steht;
   einem Filtermittel (12) zum Verarbeiten des Verzögerungssignals ($S_{RIT}$) und des zweiten elektrischen Signals ($S_T$) mittels einer vorgegebenen Transferfunktion ($F_1$), um so den Beitrag der internen Schaltungsverzögerungen ($\Delta_{RIT}$) aus dem zweiten elektrischen Signal ($S_T$) zu eliminieren, und um ein Abstandssignal ($S_D$), das den Abstand (D) des Objekts (2) von der Abstandsmess-Vorrichtung (1) zu liefern;
   wobei die Abstandsmess-Vorrichtung (1) **dadurch gekennzeichnet ist, dass**
   das Signalerzeugungsmittel (7) ein Bezugssignal ($S_{RIF}$) erzeugt, und das Verarbeitungsmittel (11) das Verzögerungssignal ($S_{RIT}$) als eine Funktion des Bezugssignals ($S_{RIF}$) erzeugt, das von dem Signalerzeugungsmittel (7) geliefert wird, wobei das Bezugssignal ($S_{RIF}$) direkt von dem Signalerzeugungsmittel (7) zu dem Verarbeitungsmittel (7) über eine elektrische Verbindung zwischen dem Verarbeitungsmittel (11) und dem Signalerzeugungsmittel (7) geliefert wird.

2. Abstandsmess-Vorrichtung nach Anspruch 1, **dadurch gekennzeichnet, dass** das Signalerzeugungsmittel (7) ein Takterzeugungsmittel (8) zum Erzeugen eines Taktsignals ($S_K$); und ein Modulationsmittel (9) zum Empfangen und Verarbeiten des Taktsignals ($S_K$), um ein Steuersignal ($S_C$) zum Steuern des Emissionsmittels (6) zu liefern, umfasst.

3. Abstandsmess-Vorrichtung nach Anspruch 1 oder 2, **dadurch gekennzeichnet, dass** das Filtermittel (12) ein Berechnungsmittel (19) zum Implementieren der vorgegebenen Transferfunktion ($F_1$) auf dem zweiten elektrischen Signal ($S_{RIT}$) aufweist, um so den Beitrag der internen Schaltungsverzögerungen ($\Delta_{RIT}$) aus dem zweiten elektrischen Signal ($S_T$) zu eliminieren, und um das Abstandssignal ($S_D$) zu liefern, das in Beziehung zu dem gemessenen Abstand steht.

4. Abstandsmess-Vorrichtung nach einem der vorangehenden Ansprüchen, **dadurch gekennzeichnet, dass** die vorgegebene Transferfunktion ($F_1$) durch einen Betrieb zur Bestimmung der Differenz wischen dem zweiten elektrischen Signal ($S_T$) und dem Verzögerungssignal ($S_{RIT}$) festgelegt wird.

5. Abstandsmess-Vorrichtung nach einem der Ansprüche 2 bis 4, **dadurch gekennzeichnet, dass** das Verarbeitungsmittel (11) eine Verstärkerschaltung (13) umfasst, um das erste elektrische Signal ($S_R$) in einer vorgegebenen Art zu verstärken, um ein drittes Signal ($S_A$) zu liefern.

6. Abstandsmess-Vorrichtung nach einem der Ansprüche 2 bis 5, **dadurch gekennzeichnet, dass** das Modulationsmittel (9) das Bezugssignal ($S_{RIF}$) erzeugt.

7. Abstandsmess-Vorrichtung nach Anspruch 6, **dadurch gekennzeichnet, dass** das Modulationsmittel (9) das Bezugssignal ($S_{RIF}$) an die Verstärkerschaltung (13) liefert.

8. Abstandsmess-Vorrichtung nach Anspruch 7, **dadurch gekennzeichnet, dass** das Verarbeitungsmittel (11) eine Pulsformungsschaltung (16) zum Empfang und zum Verarbeiten des dritten Signals ($S_A$) umfasst, das von der Verstärkerschaltung (13) geliefert wird, um so das zweite elektrische Signal ($S_T$) und das Verzögerungssignal ($S_{RIT}$) zu liefern.

9. Abstandsmess-Vorrichtung nach einem der Ansprüche 2 bis 8, **dadurch gekennzeichnet, dass** die Takterzeugungsschaltung (8) das Bezugssignal ($S_{RIF}$) erzeugt.

**10.** Abstandsmess-Vorrichtung nach Anspruch 9, **dadurch gekennzeichnet, dass** das Verarbeitungsmittel (11) eine Pulsformungsschaltung (16) zum Empfang des ersten elektrischen Signals ($S_A$) von der Verstärkerschaltung (13) und des Bezugssignals ($S_{RIF}$) und des Taktsignals ($S_K$) von der Takterzeugungsschaltung (8) umfasst, wobei die Pulsformungsschaltung (16) das erste elektrische Signal ($S_A$), das Bezugssignal ($S_{RIF}$) und das Taktsignal ($S_K$) verarbeitet, um das zweite elektrische Signal ($S_T$) und das Verzögerungssignal ($S_{RIT}$) zu liefern.

**11.** Abstandsmess-Vorrichtung nach Anspruch 10, **dadurch gekennzeichnet, dass** das Taktsignal ($S_K$) und das Bezugssignal ($S_{RIF}$) die gleiche Frequenz haben.

**12.** Abstandsmess-Vorrichtung nach Anspruch 11, **dadurch gekennzeichnet, dass** das Taktsignal ($S_K$) und das Bezugssignal ($S_{RIF}$) um einen vorgegebenen Winkel phasenverschoben sind.

**13.** Abstandsmess-Vorrichtung nach einem der vorangehenden Ansprüchen, **dadurch gekennzeichnet, dass** das Emissionsmittel (6) einen Photoemitter (6) umfasst.

**14.** Abstandsmess-Vorrichtung nach Anspruch 13, **dadurch gekennzeichnet, dass** der Photoemitter (6) ein LASER-Photoemitter ist.

**15.** Abstandsmess-Vorrichtung nach einem der vorangehenden Ansprüchen, **dadurch gekennzeichnet, dass** das Empfangsmittel (10) einen Photoempfänger (10) umfasst.

**16.** Abstandsmess-Vorrichtung nach Anspruch 15, **dadurch gekennzeichnet, dass** der Photoempfänger (10) eine Lawinen-Photodiode umfasst.

**17.** Abstandsmess-Vorrichtung nach einem der vorangehenden Ansprüche, **dadurch gekennzeichnet, dass** sie eine optische Anordnung (4) zum Kanalisieren des Lichtstrahls zu und von dem Objekt (2) aufweist.

**Revendications**

**1.** Dispositif de télémétrie (1), comprenant :

- un moyen d'émission (6) pour émettre un faisceau lumineux sur un objet (2) ;
- un moyen de réception (10) pour recevoir et convertir le faisceau lumineux réfléchi par ledit objet (2) en un premier signal électrique ($S_R$) associé à la distance (D) entre l'objet (2) et le dispositif de télémétrie (1) ;
- un moyen de traitement (11) pour recevoir en entrée ledit premier signal électrique ($S_R$) dudit moyen de réception (10) et pour traiter ledit premier signal électrique ($S_R$) pour délivrer en sortie un deuxième signal électrique ($S_T$) associé à la fois à ladite distance (D) et aux retards de circuit interne ($\Delta_{RIT}$) introduits dans le premier signal électrique ($S_R$) par le moyen de traitement (11) au cours du traitement dudit premier signal électrique ($S_R$) ;
- un moyen générateur de signal (7) pour commander ledit moyen d'émission (6) et le faire coopérer avec ledit moyen de traitement (11) pour générer un signal de retard ($S_{RIT}$) associé aux retards de circuit interne ($\Delta_{RIT}$) dans ledit deuxième signal électrique ($S_T$) ;
- un moyen de filtrage (12) pour traiter ledit signal de retard ($S_{RIT}$) et ledit deuxième signal électrique ($S_T$) au moyen d'une fonction de transfert prédéterminée ($F_1$) de manière à éliminer la contribution desdits retards de circuit interne ($\Delta_{RIT}$) dudit deuxième signal électrique ($S_T$) et à délivrer un signal de distance ($S_D$) indiquant ladite distance (D) de l'objet (2) par rapport au dispositif de télémétrie (1) ;

ledit dispositif de télémétrie (1) étant **caractérisé en ce que** : ledit moyen générateur de signal (7) génère un signal de référence ($S_{RIF}$) et ledit moyen de traitement (11) génère ledit signal de retard ($S_{RIT}$) en fonction dudit signal de référence ($S_{RIF}$) délivré par ledit moyen générateur de signal (7), ledit signal de référence ($S_{RIF}$) est délivré directement par ledit moyen générateur de signal (7) audit moyen de traitement (11) via une connexion électrique entre ledit moyen de traitement (11) et ledit moyen générateur de signal (7).

**2.** Dispositif de télémétrie selon la revendication 1, **caractérisé en ce que** ledit moyen générateur de signal (7) comprend un moyen générateur d'horloge (8) pour générer un signal d'horloge ($S_K$) ; et un moyen de modulation (9) pour recevoir et traiter ledit signal d'horloge ($S_K$) dans le but de délivrer un signal de commande ($S_C$) pour commander ledit moyen d'émission (6).

**3.** Dispositif de télémétrie selon la revendication 1 ou 2, **caractérisé en ce que** ledit moyen de filtrage (12) comprend un circuit de calcul (19) pour implémenter ladite fonction de transfert prédéterminée ($F_1$) sur le deuxième signal électrique ($S_T$) et sur ledit signal de retard ($S_{RIT}$) de manière à éliminer la contribution desdits retards de circuit interne ($\Delta_{RIT}$) du deuxième signal électrique ($S_T$) et à délivrer le signal de distance ($S_D$) associé à la distance mesurée (D).

4. Dispositif de télémétrie selon l'une quelconque des revendications précédentes, **caractérisé en ce que** ladite fonction de transfert prédéterminée ($F_1$) est définie par une opération pour déterminer la différence entre ledit deuxième signal électrique ($S_T$) et ledit signal de retard ($S_{RIT}$).

5. Dispositif de télémétrie selon l'une quelconque des revendications 2 à 4, **caractérisé en ce que** ledit moyen de traitement (11) comprend un circuit d'amplification (13) pour amplifier ledit premier signal électrique ($S_R$) de manière prédéterminée pour délivrer un troisième signal ($S_A$).

6. Dispositif de télémétrie selon l'une quelconque des revendications 2 à 5, **caractérisé en ce que** ledit moyen de modulation (9) génère ledit signal de référence ($S_{RIF}$).

7. Dispositif de télémétrie selon la revendication 6, **caractérisé en ce que** ledit moyen de modulation (9) délivre ledit signal de référence ($S_{RIF}$) audit circuit d'amplification (13).

8. Dispositif de télémétrie selon la revendication 7, **caractérisé en ce que** ledit moyen de traitement (11) comprend un circuit de mise en forme d'impulsions (16) pour recevoir et traiter ledit troisième signal ($S_A$) délivré par ledit circuit d'amplification (13) de manière à délivrer ledit deuxième signal électrique ($S_T$) et ledit signal de retard ($S_{RIT}$).

9. Dispositif de télémétrie selon l'une quelconque des revendications 2 à 8, **caractérisé en ce que** ledit circuit générateur d'horloge (8) génère ledit signal de référence ($S_{RIF}$).

10. Dispositif de télémétrie selon la revendication 9, **caractérisé en ce que** ledit moyen de traitement (11) comprend un circuit de mise en forme d'impulsions (16) pour recevoir ledit premier signal électrique ($S_A$) dudit circuit d'amplification (13) et ledit signal de référence ($S_{RIF}$) et ledit signal d'horloge ($S_K$) dudit circuit générateur d'horloge (8) ; ledit circuit de mise en forme d'impulsions (16) traitant ledit premier signal électrique ($S_A$), ledit signal de référence ($S_{RIF}$) et ledit signal d'horloge ($S_K$) pour délivrer ledit deuxième signal électrique ($S_T$) et ledit signal de retard ($S_{RIT}$).

11. Dispositif de télémétrie selon la revendication 10, **caractérisé en ce que** ledit signal d'horloge ($S_K$) et ledit signal de référence ($S_{RIF}$) ont la même fréquence.

12. Dispositif de télémétrie selon la revendication 11, **caractérisé en ce que** ledit signal d'horloge ($S_K$) et ledit signal de référence ($S_{RIF}$) sont décalés en phase d'un angle prédéterminé (a).

13. Dispositif de télémétrie selon l'une quelconque des revendications précédentes, **caractérisé en ce que** ledit moyen d'émission (6) comprend un photoémetteur (6).

14. Dispositif de télémétrie selon la revendication 13, **caractérisé en ce que** ledit photoémetteur (6) est un photoémetteur à LASER.

15. Dispositif de télémétrie selon l'une quelconque des revendications précédentes, **caractérisé en ce que** ledit moyen de réception (10) comprend un photorécepteur (10).

16. Dispositif de télémétrie selon la revendication 15, **caractérisé en ce que** ledit photorécepteur (10) comprend une photodiode à avalanche.

17. Dispositif de télémétrie selon l'une quelconque des revendications précédentes, **caractérisé en ce qu'**il comprend un assemblage optique (4) pour canaliser ledit faisceau lumineux vers ledit objet (2) et depuis celui-ci.

Fig.1

Fig.2

Fig.3

Fig.4

**REFERENCES CITED IN THE DESCRIPTION**

**Patent documents cited in the description**

- US 4738529 A
- US 5515056 A